# EUROPEAN PATENT SPECIFICATION

(11) **EP 3 810 331 B1**
(45) Date of publication and mention of the grant of the patent: **07.08.2024**
(21) Application number: 19728986.1
(22) Date of filing: 05.06.2019
(51) Int. Cl.: B03D 1/008, B03D 1/01, B03D 1/004

(54) **USE OF POLYOLS FOR IMPROVING A PROCESS FOR REVERSE FROTH FLOTATION OF IRON ORE**
VERWENDUNG VON POLYOLEN ZUR VERBESSERUNG EINES VERFAHRENS ZUR UMGEKEHRTEN SCHAUMFLOTATION VON EISENERZ
UTILISATION DE POLYOLS POUR AMÉLIORER UN PROCÉDÉ DE FLOTTATION PAR MOUSSE INVERSE DE MINERAI DE FER

(30) Priority: 19.06.2018 EP 18178421
(43) Date of publication of application: 28.04.2021
(73) Proprietor: Clariant International Ltd, 4132 Muttenz (CH)
(72) Inventor: KRULL, Matthias, 55296 Harxheim (DE); DA SILVA, Wagner Claudio, CEP 05731-150, Sao Paulo-SP (BR); RHODES, Valdilene, CEP 31330-290, Belo Horizonte City, Minas Gerais (BR); BICALHO, Leandro, CEP 30285-020, Belo Horizonte City, Minas Gerais (BR)
(74) Representative: Clariant Produkte (Deutschland) GmbH
(86) International application number: PCT/EP2019/064701
(87) International publication number: WO 2019/243058

(56) References cited:
- US-A- 4 319 987
- US-A- 5 540 336
- US-A1- 2014 144 290
- "Ullmann's Encyclopedia of Industrial Chemistry", 15 July 2008, WILEY-VCH VERLAG, Weinheim, ISBN: 978-3-52-730673-2, article PETER WERLE ET AL: "Alcohols, Polyhydric", XP055180463, DOI: 10.1002/14356007.a01_305.pub2
- L.O. FILIPPOV ET AL: "The use of collectors mixture in the reverse cationic flotation of magnetite ore: The role of Fe-bearing silicates", MINERALS ENGINEERING., vol. 23, no. 2, 1 January 2010 (2010-01-01), GB, pages 91 - 98, XP055525499, ISSN: 0892-6875, DOI: 10.1016/j.mineng.2009.10.007
- PAPINI RM ET AL: "Cationic flotation of iron ores: amine characterization and performance", MINERALS AND METALLURGICAL PROCESSING, SOCIETY FOR MINING, METALLURGY AND EXPLORATION, US, vol. 18, no. 1, 1 January 2001 (2001-01-01), pages 5 - 9, XP009090087, ISSN: 0747-9182

## Description

The present invention relates to the use of polyols for improving a process for enriching an iron ore from a silicate-containing iron bearing mineral by carrying out an inverse ore flotation process using a mixture of an alkyl ether amine and/or an alkyl ether diamine with a polyol as collector. This process provides a favorable foaming behavior and it is feasible at low temperatures.

Removal of SiO₂ from different ores by froth flotation in the presence of hydrophobic amines is a well-known process. The negatively charged silicate can be hydrophobized using suitable amphiphilic amines which attach to the silicate surface. Injection of air in a flotation cell containing an aqueous suspension of the treated ore leads to formation of gas bubbles. These hydrophobic gas bubbles collect the hydrophobized silicate particles and transport them to the top of the flotation cell. At the top of the flotation cell froth collects the silicate particles. Finally, the froth will be removed from the surface and the enriched mineral is left at the bottom of the flotation cell.

Iron ore often contains considerable amounts of silicates, as for example quartz, which may be in the range of from about 20 to 45 wt.-%. However, the presence of higher contents of silicates has a detrimental effect on the quality of the iron ore, for example in reduction processing in a blast furnace. Therefore, the silica content in iron ore concentrates is the limiting factor for their usability; typically it should not exceed 3% for steelmaking processes from iron ore pellets, in direct reduction processes (DRI-pellets) as well as in electric-arc smelting processes. Moreover, with the development of the iron electrolysis process for ultra-low carbon dioxide steelmaking (EU ULCOS project), more stringent quality requirements are applied to iron ore concentrates in terms of very low SiO₂ and Al₂O₃ content (more than 98 wt.-% Fe oxide is required).

In order to become commercially usable, it is therefore essential that the silicate content of a crude iron ore is considerably reduced. However, due to the exhausting reserves of high-grade ores in the world the quality of ore is constantly decreasing. With raised SiO₂ content in the ores a selective enrichment of iron respectively a selective removal of silicate is more difficult than in the past with ores of higher quality. Nowadays froth flotation is considered to be the most efficient process in mineral processing to recover valuable minerals from gangue.

A common process of removing silicates from iron ore is reversed froth flotation, where the silicates are enriched in the froth (tailings) and leave the system with the froth, and the iron ends up in the bottom fraction (concentrate). In practice reverse froth flotation usually encounters one of two drawbacks: either the iron ore bottom fraction contains a low level of SiO₂ - which in turn leads to a low recovery of iron; or the recovery of iron is high - which in turn leaves a higher level of SiO₂ in the ore. Various solutions have been proposed in the prior art to simultaneously increase iron recovery and reduce SiO₂ levels.

In the cationic route for reverse iron ore flotation the gangue mineral, mainly quartz, is floated with alkyl ether amines (R-(OCH₂)₃-NH₂, with R being a fatty alkyl residue) often partially neutralized with acetic acid, as a collector. The degree of neutralization is an important parameter as higher neutralization degrees enhance the collector solubility but impair the flotation performance. The flotation performance of certain iron ore types is enhanced with the use of alkyl ether diamines (R-(OCH₂)₃-NH-(CH₂)₃-NH₂, with R being a fatty alkyl residue), optionally in combination with alkyl ether monoamines. Often the iron ore is simultaneously depressed by non-modified starches.

US 3363758 relates to a froth flotation process for separating silica from an ore employing acid salts of primary aliphatic ether amines and aliphatic ether diamines in which the aliphatic radical has between one and 13 carbon atoms.

CA 1100239 discloses aqueous emulsions of alkyl ether amines and alkyl ether diamines as collecting agents for use in a froth flotation process for separating or concentrating minerals from ore.

US 4319987 describes the use of primary branched aliphatic alkyl ether monoamines and their partial acid salts for removal of silicate from iron ore. The methyl-branched alkyl residues predominantly contain 8-10 carbon atoms.

US 6076682 discloses the combined use of an alkyl ether monoamine with an alkyl ether diamine for the silicate flotation from iron ore. In preferred alkyl ether monoamines the alkyl residue contains 8 to 12 carbon atoms and in preferred alkyl ether diamines the alkyl residue contains 8 to 14 carbon atoms.

WO 2012/139985 discloses a process for enriching an iron mineral from a silicate containing iron ore by inverse flotation using a collector comprising an ether amine and/or an ether diamine with an aliphatic iso-C₁₃H₂₇-group with average branching degree ranging from 1.5 to 3.5.

Meanwhile various studies have indicated that the addition of non-ionic surfactants as for example fatty alcohols can improve the cationic flotation of silicates because it increases flotation selectivity and recovery of silicates compared with the individual components, as well as a remarkable decrease in cationic collector consumption.

Filippov et. al (Minerals Engineering 23 (2010) 91-98) disclose that the addition of fatty alcohol (e.g. tridecanol) may increase the flotation recovery of quartz. Similarly, also the flotation of iron containing silicates as for example pargasite is supported, even in the presence of starch.

Liu (Int. J. Electrochem. Sci., 10 (2015) 10188 - 10198) discloses that flotation recovery of pure quartz in froth flotation using N-dodecyl ethylene diamine as cationic collector is improved in the presence of alcohols, including ethanediol and glycerol. However, longer chain mono alcohols show the most promising results. They allow to substitute part of the diamine.

US 2014/0144290 teaches collector compositions and methods for making and using same. The collector can include one or more etheramines and one or more amidoamines. A liquid suspension or slurry comprising one or more particulates can be contacted with the collector to produce a treated mixture. A product can be recovered from the treated mixture that includes a purified liquid having a reduced concentration of the particulates relative to the treated mixture, a purified particulate product having a reduced concentration of liquid relative to the treated mixture, or both. The collector may comprise a polyol as freezing point depressant.

US 5540336 teaches the flotation of iron ores using mixtures containing at least one ether amine of formula (I):

R¹O - (CₙH₂ₙ)_{y} - NH - (CₘH₂ₘ - NH)ₓH

in which
- R¹: is a linear or branched chain aliphatic hydrocarbon moiety having 6 to 22 carbon atoms and 0, 1, 2 or 3 double bonds;
- n and m: independently of one another represent the number 1, 2 or 3;
- x: is 0 or the number 1, 2 or 3; and
- y: is 2 or 3, and
at least one other anionic and/or nonionic co-collector which is an anionic or nonionic surfactant.

US 4319987 teaches the use of primary aliphatic ether amines as silica collectors in the concentration of minerals by the froth flotation process. More specifically, the use of mixtures of primary methyl branched aliphatic ether amines and the partially-neutralized salts thereof as flotation reagents. In further aspect, the use of mixtures of 3-isooctoxypropyl monoamine and 3-isodecoxypropyl monoamine and/or the partially-neutralized acetate salts thereof as collectors for silica in the beneficiation of oxidized taconite ores.

Accordingly, there are methods and processes available to enrich iron ore from the gangue containing SiO₂ and to produce iron ore with low SiO₂ content suited for steelmaking processes. However, there are different aspects which limit the efficiency of the known flotation processes: part of the iron ore particles have very small particle sizes which are floated with the froth; the currently known collectors are not selective enough and floate certain modifications of iron ore as for example hematite at least partly with the froth; mixed particles with high iron but low quartz content are removed with the froth. Furthermore, the performance of the collectors according to the state of the art is often reduced at low temperatures as for examples in colder regions and/or in winter time.

As the iron recovery rate is of major economic importance to the plant operation there was the need for a flotation aid and a process for the beneficiation of crude iron ore which allows for an improved recovery rate of the valuable iron ore without raising the silicate content of the recovered iron ore concentrate. As a mining plant often processes varying types of iron ores in parallel such flotation aid shall work for a variety of different crude iron ores as encountered in day-to-day operations. Such process as well as the collector it uses should be applicable even at low temperatures as they are encountered for example in winter times.

Furthermore, the reverse flotation of iron ore requires significant storage volumes for collection of the froth until it collapses and releases the gangue mineral for further processing or discharge. Although a froth is required for effective flotation it should be as dense as possible and it should collapse as fast as possible after its separation from the flotation cell. Otherwise problems like pump cavitation, loss of efficiency in thickeners, presence of foam in the tailings dam and other environmental problems may occur. Accordingly, there was the further need for a flotation aid which forms a more efficient but less voluminous froth which collapses quicker than the froth formed by the additives according to the state of the art after its job is done. Such flotation aid would require less storage volume for collecting the froth and/or allow for higher throughput at the given storage capacity.

Surprisingly it has been found that the use of a collector composition comprising an alkyl ether amine and/or an alkyl ether diamine and a water-miscible polyhydric alcohol gives rise to a higher recovery rate of iron ore during reverse iron ore flotation than the alkyl ether amine and/or alkyl ether diamine alone. A flotation process which makes use of an alkyl ether amine and/or an alkyl ether diamine as part of a collector is considered to be a cationic flotation process. Concurrently the SiO₂ content of the recovered iron ore concentrate at least remains essentially unchanged on its low level but is often further reduced. This is especially astonishing as water-miscible polyhydric alcohols on their own do not possess collecting properties. Often part of the alkyl ether (di)amine can be substituted by the polyhydric alcohol. Accordingly, the overall dosage rate of the collector composition usually can be kept constant and often it can be even reduced in comparison to the use of the alkyl ether (di)amine on its own. Furthermore, the foam formed by the collector composition according to the invention is less voluminous allowing for reduced storage volumes and/or higher throughput in a given installation. Additionally it has been found that the performance of the cationic flotation process in the presence of an alkyl ether (di)amine and a water-miscible polyhydric alcohol remains essentially unchanged when water temperature drops to temperatures of below 10°C and often also down to 5°C or even below while it becomes significantly poorer when using an alkyl ether (di)amine only. This is a big technical advantage because many ore deposits are located in areas where winters are cold, for example on the North American Continent in Michigan, Minnesota, and in Canada.

In a first aspect of the invention there is provided the use of a water-miscible polyhydric alcohol having two or three hydroxyl groups for improving the collector performance of a collector composition for the reverse iron ore flotation comprising at least one alkyl ether amine of formula (I) and/or alkyl ether diamine of formula (II)

R¹-(O-A)-NH₂ (I)

R²-(O-A)-NH-R³-NH₂ (II)

wherein
- R¹: is a hydrocarbyl group with 6 to 24 carbon atoms,
- R²: is a hydrocarbyl group with 6 to 24 carbon atoms,
- R³: is an aliphatic hydrocarbyl group with 2 to 4 carbon atoms
- A: is an alkylene group with 2 to 6 carbon atoms

wherein the water- miscible polyhydric alcohol (component B) having two or three hydroxyl groups is selected from the group consisting of ethylene glycol propylene glycol, butylene glycol, pentanediol, neopentyl glycol, hexanediol, glycerol, diethylene glycol and triethylene glycol,
wherein the term "improving the collector performance" means
   (i) an increase of recovery rate of iron ore when the water-miscible polyhydric alcohol having two or three hydroxyl groups is present, compared to the case when said alcohol is absent;
   (ii) a higher selectivity in removal of silicate, which means that the collector composition comprising the water-miscible polyhydric alcohol enables a higher proportion of the iron to be retained and a higher proportion of the silicate to be removed, compared to the case when said alcohol is absent;
   (iii) that the amount of iron retained and the amount of silicate removed in the flotation process according to the second aspect in the presence of the water-miscible polyhydric alcohol remains essentially unchanged when the temperature at which said process is executed drops to temperatures of below 10 °C, preferably down to 5 °C, or even below 5 °C, compared to the case when said alcohol is absent in which case the amount of iron retained and the silicate removed becomes poorer;
   (iv) that the froth formed by the collector composition comprising the water-miscible polyhydric alcohol is less voluminous, and after separation from the flotation cell it collapses faster, compared to the case when said alcohol is absent, and wherein
improvement of collector performance and improving the collector performance is assumed to occur if one or more of conditions (i) to (iv) are met.

In a second aspect of the invention there is provided a process for improving the collector performance of a collector composition for enriching an iron ore through reverse flotation of a silicate containing iron ore, the collector composition comprising at least one alkyl ether amine of formula (I) and/or alkyl ether diamine of formula (II)

R¹-(O-A)-NH₂ (I)

R²-(O-A)-NH-R³-NH₂ (II)

wherein
- R¹: is a hydrocarbyl group with 6 to 24 carbon atoms,
- R²: is a hydrocarbyl group with 6 to 24 carbon atoms,
- R³: is an aliphatic hydrocarbyl group with 2 to 4 carbon atoms
- A: is an alkylene group with 2 to 6 carbon atoms,
the process comprising adding to the collector composition at least one water-miscible polyhydric alcohol having two or three hydroxyl groups,
wherein the water- miscible polyhydric alcohol (component B) having two or three hydroxyl groups is selected from the group consisting of ethylene glycol propylene glycol, butylene glycol, pentanediol, neopentyl glycol, hexanediol, glycerol, diethylene glycol and triethylene glycol,
wherein the term "improving the collector performance" means
   (i) an increase of recovery rate of iron ore when the water-miscible polyhydric alcohol having two or three hydroxyl groups is present, compared to the case when said alcohol is absent;
   (ii) a higher selectivity in removal of silicate, which means that the collector composition comprising the water-miscible polyhydric alcohol enables a higher proportion of the iron to be retained and a higher proportion of the silicate to be removed, compared to the case when said alcohol is absent;
   (iii) that the amount of iron retained and the amount of silicate removed in the flotation process according to the second aspect in the presence of the water-miscible polyhydric alcohol remains essentially unchanged when the temperature at which said process is executed drops to temperatures of below 10 °C, preferably down to 5 °C, or even below 5 °C, compared to the case when said alcohol is absent in which case the amount of iron retained and the silicate removed becomes poorer;
   (iv) that the froth formed by the collector composition comprising the water-miscible polyhydric alcohol is less voluminous, and after separation from the flotation cell it collapses faster, compared to the case when said alcohol is absent, and wherein
improvement of collector performance and improving the collector performance is assumed to occur if one or more of conditions (i) to (iv) are met.
In the context of this patent application the term "recovery rate" means the ratio of the iron recovered in the concentrate obtained from the flotation process in relation to the initial total iron mass in the crude ore. Crude iron ore means an iron content of about 20 to about 55 wt.-%. Concentrated iron ore is understood to have an iron content of at least 64 wt.-%.

Improvement of collector performance and improving the collector performance preferably is assumed to occur if one or more of conditions (i) to (iv) are met.

In the following, the etheramine and/or ether diamine may be referred to as component A and the water-miscible polyhydric alcohol with two or three OH groups may be referred to as component B.

### ALKYL ETHER AMINE AND ALKYL ETHER DIAMINE (COMPONENT A)

In the context of this patent application the term "alkyl ether (di)amine" encompasses both alkyl ether amines of formula (I) and alkyl ether diamines of formula (II) individually as well as their mixtures. In mixtures containing (I) and (II) the alkyl residues R¹ and R² maybe the same or different.

In a preferred embodiment the hydrocarbyl residues R¹ and/or R² of the alkyl ether (di)amine have independently from each other 7 to 18 and more preferably 8 to 15 carbon atoms, as for example 6 to 18 carbon atoms, or 6 to 15 carbon atoms, or 7 to 24 carbon atoms, or 7 to 15 carbon atoms, or 8 to 24 carbon atoms, or 8 to 18 carbon atoms.

Preferably R¹ and/or R² is an aliphatic hydrocarbyl residue. More preferably, R¹ and/or R² is a linear or branched hydrocarbyl residue.

In a further preferred embodiment R¹ and/or R² is saturated or at least essentially saturated. Essentially saturated means that the iodine number of the ether(di)amine is below 20 g I₂/100 g as for example below 10 g I₂/100 g. In an especially preferred embodiment R¹ and/or R² is a saturated aliphatic hydrocarbyl radical.

R³ may be linear or branched when containing 3 or more carbon atoms. In a preferred embodiment R³ is a -C₂H₄- or a -C₃H₆- group and especially preferred is a linear C₃H₆ group of the formula -CH₂-CH₂-CH₂-.

A may be linear or branched when containing 3 or more carbon atoms. In a preferred embodiment A is an aliphatic alkylene group containing 2 to 4 carbon atoms and especially preferred A comprises three carbon atoms. It is particularly preferred that A is a linear C₃H₆ group of the formula -CH₂-CH₂-CH₂-.

Similarly suited and often preferred are salts of the alkyl ether amines (I) and/or alkyl ether diamines (II) which can be prepared by neutralization of the alkyl ether (di)amine with an organic and/or inorganic acid. The acidic compound may be any suitable acid, for instance an acid whose anion is selected from the group consisting of carboxylate, sulphate, sulphonate, chloride, bromide, iodide, fluoride, nitrate, and phosphate. Preferably the acid is a carboxylic acid, particularly an aliphatic carboxylic acid having between one and six carbon atoms or an olefinically unsaturated carboxylic acid having between three and six carbon atoms. More preferably the carboxylic acid is an aliphatic carboxylic acid having between one and three carbon atoms as for example formic acid, acetic acid and/or propionic acid. Acetic acid is most preferred.

The acidic compound may be added to the alkyl ether amine compound of formula (I) and/or the alkyl ether diamine compound of formula (II) in a molar equivalent. However, often it has proven advantageous to add less than an equimolar amount of the acidic compound which will result in partial protonation and therefore result in a mixture of the unprotonated alkyl ether (di)amine of formulae (I) and/or (II) and the corresponding protonated alkyl ether (di)amine. In some instances it has also proven to be advantageous to add a greater than equimolar amount of the acidic compound resulting in a stoichiometric excess of the acidic compound. Typically the molar ratio of acidic compound to alkyl ether amine may be between 1.0 : 25.0 and 1.5 : 1.0, preferably between 1.0 : 10.0 and 1.0 : 1.0 and especially between 1.0 : 5.0 and 1.0 to 1.2 as for example between 1.0 : 25.0 and 1.0 : 1.0, or between 1.0 : 25.0 and 1.0 to 1.2, or between 1.0 : 10.0 and 1.5 : 1.0, or between 1.0 : 10.0 and 1.0 to 1.2, or between 1.0 : 5.0 and 1.5 : 1.0 .

Methods for synthesis of alkyl ether amines (I) and alkyl ether diamines (II) are well known. Alkyl ether amines (I) may be prepared by reacting an alcohol R'-OH (wherein R¹ has the same meaning as given for the alkyl ether (di)amines above) with an ethylenically unsaturated nitrile having between 3 and 6 carbon atoms, to provide an alkyl ether nitrile and subsequent reduction of the nitrile. Suitable ethylenically unsaturated nitriles include acrylonitrile, methacrylonitrile, ethacrylonitrile, 2-n-propylacrylonitrile and 2-iso-propylacrylonitrile. In a preferred embodiment the ethylenically unsaturated nitrile contains three carbon atoms, as for example acrylonitrile. Preferably the reaction is carried out in the presence of a base and a polar solvent. Typically the base may be an alkali metal alkoxide, preferably an alkali metal ethoxide or alkali metal methoxide, especially it is sodium methoxide. The ethylenically unsaturated nitrile may be added in an equimolar quantity in respect to the alcohol but preferably it is added in a stoichiometric excess in order to ensure that all of the alcohol is reacted. Often the molar ratio of the acrylonitrile to the alcohol can be above 1:1 and up to 10:1, preferably from 1.5:1 to 5:1 , more desirably between 1:1 and 2:1. The surplus of ethylenically unsaturated nitrile is preferably removed afterwards.

The alcohol R'-OH used for the preparation of the alkyl ether amine (I) may be any linear fatty alcohol or branched alcohol with between 6 and 24 carbon atoms. Preferably the alcohol has 7 to 18, and more preferably 8 to 15 carbon atoms, as for example 6 to 18 carbon atoms, or 6 to 15 carbon atoms, or 7 to 24 carbon atoms, or 7 to 15 carbon atoms, or 8 to 24 carbon atoms, or 8 to 18 carbon atoms. In a preferred embodiment the alcohol R'-OH is a primary alcohol. The alkyl chain of the alcohol R'-OH may be linear or branched. In a preferred embodiment the alkyl chain is branched due to its reduced tendency for crystallization. The alkyl chain may be saturated or unsaturated. Preferably the alkyl chain is saturated or at least essentially saturated. Essentially saturated means that the iodine value of the alcohol R'-OH is below 20 g I₂/100 g of alcohol as for example below 10 g I₂/100 g of alcohol. The iodine value can be determined according to the method of Wijs (DIN 53241). Preferred alcohols include natural and synthetic alcohols.

Examples for preferred linear fatty alcohols R'-OH are octanol, nonanol, decanol, undecanol, dodecanol, tridecanol, tetradecanol, hexadecanol, octadecanol and their mixtures. They may be of natural or synthetic origin. Especially preferred are alcohol mixtures based on natural fats and oils as for example coco fatty alcohol, palm fatty alcohol, palm kernel fatty alcohol, soy fatty alcohol, rapeseed fatty alcohol and tallow fatty alcohol. Linear alcohols can be obtained commercially e.g. from Cognis, Sasol or Shell.

Preferred branched alcohols may be based on dimerization, trimerization, tetramerization respectively oligomerization products of lower olefins with 2 to 6 and especially with 3 or 4 carbon atoms which have been converted to alcohols e.g. by hydrolysis or hydroformylation. Alcohols prepared by Guerbet reaction comprising the aldol condensation of an alcohol with an aldehyde in the presence of a catalyst and subsequent hydrogenation of the formed aldol are similarly suited.

Especially preferred alcohols R'-OH are prepared by catalytic dimerization, trimerization resp. tetramerization of propene, 1-butene, 2-butene, isobutene or their mixtures. Depending on the lower olefin(s) used for the preparation of the alcohol R¹-OH the branching of the hydrocarbyl group R¹ may vary. Preferred alkyl resides stemming from a predominantly linear 1-butene feed may have a low average branching degree in the range from 2.0 to 2.5. The degree of branching is defined as the number of methyl groups in one molecule of R'-OH minus 1, wherein the average degree of branching is the statistical mean of the degree of branching of the molecules of a sample. The mean number of methyl groups in the molecules of a sample can easily be determined by ¹H-NMR spectroscopy. For this purpose, the signal area corresponding to the methyl protons in the ¹H-NMR spectrum of a sample is divided by three and then divided by the signal area of the methylene protons of the -CH₂-OH group divided by two. Preferred alcohols R'-OH derived from propene, 2-butene and/or isobutene have branch degrees above 2.5 and often above 3.0 as for example between 3.0 and 4.5. The specifics of the branching in R¹ give rise to different surface-active properties, environmental impact, toxicity and biodegradability profiles. Branched alcohols R'-OH may be obtained commercially from e. g. BASF, ExxonMobil, Shell or Evonik Industries.

Particular preference as alcohol R¹-OH is given to 2-ethylhexanol and to the different isomers of isononanol, isodecanol and isotridecanol. Especially preferred are mixtures of different isomers of isononanol, isodecanol and/or isotridecanol.

Reaction protocols for the synthesis of alkyl ether amines (I) are well known. For example, in a first step the above specified alcohol R¹-OH is reacted with an ethylenically unsaturated nitrile having 3 to 6 carbon atoms to form an alkyl ether nitrile which is subsequently reduced to the corresponding alkyl ether amine (I). Preferred ethylenically unsaturated nitriles include acrylonitrile, methacrylonitrile, ethacrylonitrile, 2-n-propylacrylonitrile and 2-iso-propylacrylonitrile. Especially preferred is acrylonitrile. The reaction of the above specified alcohol R'-OH with the ethylenically unsaturated nitrile may take place at a temperature between 10°C and 60°C and over a time period of at least 10 minutes and as long as 24 hours. Preferably the resulting alkyl ether nitrile should have a purity of at least 90 wt.-% and more preferably of at least 95 wt.-%. The second reaction step can be achieved by any conventional process for the reduction of nitriles to amines as for example by reaction with hydrogen in the presence of Raney-Cobalt.

In an alternative process for producing the alkyl ether amine (I) the above specified alcohol R¹-OH is reacted with a C₂-C₆ alkylene oxide to produce the corresponding alkyl ether alcohol which is subsequently aminated. In a first reaction step the alcohol R'-OH (wherein R¹ has the same meaning as given for the alkyl ether (di)amines above) is reacted with one molar equivalent of alkylene oxide in the presence of a base as for example in the presence of sodium hydroxide, potassium hydroxide, an amine like imidazol or a tertiary amine. This reaction can also be catalyzed by double metal catalysts. Preferred alkylene oxides are ethylene oxide, propylene oxide, 1,2-butylene oxide, 2,3-butylene oxide, 1,2-pentene oxide and/or 1,2-hexene oxide. Especially preferred alkylene oxides are ethylene oxide and propylene oxide. In a second reaction step the hydroxyl groups of the alkyl ether alcohol formed in the first step is converted into the corresponding amine by reductive amination. This can be conducted for example with hydrogen in the presence of a suitable catalyst. Conversion of the alcohol group into a primary amino group is usually at least 85% but often even higher.

Preferably the resulting alkyl ether amine (I) has a purity of at least 85%, more preferably at least 88% and especially 90% or higher. Examples for especially preferred alkyl ether amines (I) are (3-isononyloxy)propylamine, (3-decyloxy)propylam ine, (3-isoundecyloxy)propylamine, (3-isotridecyloxy)propylamine and (3-dodecyloxy-/tetradecyloxy)propylam ine.

Reaction protocols for the synthesis of alkyl ether diamines (II) are well known. For example, the alkyl ether diamines of formula may be synthesized by reacting an alkyl ether amine of formula (I) with a molar equivalent of an ethylenically unsaturated nitrile having 3 or 4 carbon atoms and subsequent reduction of the intermediately formed alkyl ether amino alkyl nitrile. Preferred ethylenically unsaturated nitriles are acrylonitrile and methacrylonitrile. Especially preferred ethylenically unsaturated nitrile is acrylonitrile. Reduction of the alkyl ether amino alkyl nitrile can be achieved by any conventional process for the reduction of nitriles to amines as for example by hydrogenation in the presence of a suited catalyst. In an alternative process for producing the alkyl ether diamines (II) the corresponding alkyl ether amine (I) can be reacted with an equimolar amount of a C₂-C₆ alkylene oxide in a similar way as described above for alkyl ether amines (I) in order to produce the corresponding alkyl ether amino alcohol which subsequently is converted to the alkyl ether diamine (II) for example by reductive amination. Preferred alkylene oxides for this synthesis route are ethylene oxide and propylene oxide.

Preferably the resulting alkyl ether diamine (II) has a purity of at least 50 %, more preferably at least 60 % and especially 75 % by mass or higher. Examples for especially preferred alkyl ether diamines (II) are N-[3-(isononyloxy)propyl]-1,3-propanediamine, N-[3-(decyloxy)propyl]-1,3-propanediamine, N-[3-(isoundecyloxy)propyl]-1,3-propanediam ine, N-3-(isotridecyloxy)propyl]-1,3-propanediamine and N-[3-(dodecyloxy-/tetradecyloxy)propyl]-1,3-propanediamine.

In accordance with the present invention either of the alkyl ether amines of formula (I) or the alkyl ether diamines of formula (II) in combination with a water-miscible polyhydric alcohol B) provides improved results in raising the recovery rate of iron ore in the process according to the second aspect of the invention as well as in the use according to the third aspect of the invention. However, when combinations of both compounds (I) and (II) are applied in the process according to the second aspect of the invention as well as in the use according to the third aspect of the invention often a superior selectivity in removal of silicate compared to the single alkyl ether amines (I) or alkyl ether diamines (II), each in combination with the water-miscible polyhydric alcohol, has been found. Thus, in a preferred embodiment of the invention the collector composition contains a mixture of an alkyl ether amine (I) with alkyl ether diamine (II). Preferably such mixture contains the components (I) and (II) in a ratio between 1:100 and 100:1 and more preferably in a ratio between 1:50 and 50:1 as for example in a ratio between 1:100 and 50:1, or in a ratio between 50:1 and 100:1.

Although useful in free amine form, the alkyl ether amines (I) and/or alkyl ether diamines (II) may be partially to fully neutralized for direct dispersion in water. The degree to which the ether (di)amine may be neutralized is such that water dispersibility is sufficient to provide adequate dispersion in the flotation mixtures while remaining liquid. Preferably the degree of neutralization is in the range of from 0 to 100 mole percent and preferably in the 5 to 50 percent range. Suitable acids for neutralization are organic as well as inorganic acids. Preferred acids have a mono- or polyvalent as for example bivalent anion. Examples for suited inorganic acids are hydrofluoric acid, hydrochloric acid, hydrobromic acid, sulfuric acid, phosphoric acid, nitric acid, boric acid and perchloric acid. Examples for suited organic acids are acetic acid, propionic acid, salicylic acid, oxalic acid, acrylic acid and succinic acid. Most preferred acid is acetic acid.

### WATER-MISCIBLE POLYHYDRIC ALCOHOL (COMPONENT B)

The water-miscible polyhydric alcohol (B) contains 2 or 3 hydroxyl groups and is selected from the group consisting of ethylene glycol, propylene glycol, butylene glycol, pentanediol, neopentyl glycol, hexanediol, glycerol, diethylene glycol and triethylene glycol. Most preferred polyols are ethylene glycol and glycerol.

The polyhydric alcohol may be of analytical grade. Preferably it is of commercial grade. Usually a purity of at least 80 wt.-% is sufficient.

### COLLECTOR COMPOSITION

In a preferred embodiment the collector composition according to the invention comprises 50 to 99 wt.-% of alkyl ether (di)amine A) and 1 to 50 wt.-% of the water-miscible polyhydric alcohol B). More preferably the collector composition contains between 55 and 95 wt.-%, especially between 60 and 90 wt.-% and especially preferred 70 and 85 wt.-% of the alkyl ether (di)amine A) as for example between 50 and 95 wt.-%, or between 50 and 90 wt.-%, or between 55 and 99 wt.-%, or between 55 and 90 wt.-% or between 60 and 99 wt.-%, or between 60 and 90 wt.-% of the alkyl ether (di)amine A). The content of the water-miscible polyhydric alcohol in the collector composition is preferably between 5 and 45 wt.-% and especially between 10 and 40 wt.-% as for example between 1 and 45 wt.-%, or between 1 and 40 wt.-%, or between 5 and 50 wt.-% or between 5 and 40 wt.-%, or between 10 and 50 wt.-% or between 10 and 45 wt.-%. In an especially preferred embodiment the contents of alkyl ether (di)amine A) and water-miscible polyhydric alcohol B) add up to 100 %.

Optionally the collector composition according to the invention may comprise additional components such as chain extenders, frothers, and/or depressants which may cause a further improvement in the flotation process and especially in the selectivity of the process.

Preferred chain extenders are substances of low polarity and accordingly low water solubility such as mineral or vegetable oils as for example kerosene, diesel, naphthenic oils, paraffinic oils, rapeseed oil, sunflower oil, soy oil or tallow fat. The presence of chain extenders has proven especially beneficial for the flotation of coarse mineral particles with particle size of for example 150 µm or even more.

Preferred depressants are hydrophilic polymers which raise the selectivity of the flotation process by interaction with the iron ore, rendering the surface of the iron ore more hydrophilic. Examples for preferred depressants are natural and modified starches as for example corn starch, cassava starch, potato starch, wheat starch, rice starch, arrowroot starch.

Often the addition of a frother has proven advantageous in order to create and/or modulate the froth behavior. Preferred frothers are pine oil, eucalyptus oil, cresylic acid, 2-ethylhexan-1-ol and 4-methyl-2-pentanol.

Alternatively or in addition to being part of the collector composition said further additives may be added to the pulp separately, for example in the flotation cell.

The collector composition may also contain a solvent. Preferred solvents are water and linear or branched monohydric alcohols with 1 to 14 carbon atoms as for example methanol, ethanol, propanol, butanol, pentanol, hexanol, heptanol, octanol, 2-ethylhexanol, nonanol, decanol, undecanol, dodecanol, tridecanol and tetradecanol. Especially preferred are water and mixtures of water with methanol, ethanol and/or propanol. Preferably the mass ratio between collector composition and the solvent is in the range of from 1:19 to 19:1 and more preferably in the range of from 1:9 and 9:1 and especially in the range of from 1:4 and 4:1 as for example in the range of from 1:19 to 1:9; or in the range of from 1:19 to 1:4; or in the range of from 1:9 to 1:19; or in the range of from 1:9 to 4:1; or in the range of from 1:4 to 1:19; or in the range of from 1:4 to 1:9.

The collector composition can be prepared by simply mixing the components in the given ratio. The sequence of addition of the components to the mixing appliance is not critical.

In a first preferred embodiment the mixing is made batch wise, e.g. in a kettle, vessel or tank, preferably with stirring.

In a second preferred embodiment the mixing is made in a continuous mode e.g. by metered dosing of the components into a mixing pipe optionally equipped with a static mixer or a dynamic mixer. Static mixers are devices located in a tubing having stationary internals which effect mixing of fluid product streams using flow energy. Useful static mixers have proven to be, for example, Multiflux, Sulzer, PMR, McHugh, Komax and Honeycomb, X, Ross-ISG and helical mixers. Preferred dynamic mixers are rotor-stator dispersers which are also called high-shear mixers. Useful dynamic mixers have proven to be toothed disk dispersers (e.g. Ultra-Turrax^{®}) and high-pressure homogenizers (Microfluidizer^{®}). Suitable shear rates are also achievable by means of a Cavitron or by ultrasound.

### ENRICHMENT PROCESS AND USE

In the process for enriching an iron ore according to the second aspect of the invention gangue predominantly comprising silicate is separated from a crude iron ore by reverse cationic flotation to produce an iron ore concentrate. This process comprises the steps of bringing an aqueous pulp of the finely ground crude iron ore into contact with the collector composition according to the first aspect of the invention comprising an alkyl ether (di)amine (component A) and a water-miscible polyhydric alcohol (component B), foaming of the so obtained composition, separation of the silicate containing froth and recovery of the enriched iron ore. After completion of the flotation a silicate-enriched froth (tailings) and a bottom fraction enriched in iron and poor in silicate are obtained (concentrate).

Prior to the flotation process the iron ore usually has to be ground, preferably together with water, to the desired particle size. In a preferred embodiment the crude iron ore has a particle size between 5 and 200 µm, more preferably between 10 and 150 µm as for example between 5 and 150 µm or between 10 and 200 µm. The collecting composition according to the invention has proven to be especially beneficial for reverse cationic flotation of ores having a P80 less or equal to 150 µm, suitably less or equal to 100 µm, for example less or equal to 50 µm. As a suspension in water the ground iron ore may be deslimed, for instance by filtration, settling and/or centrifuging, if necessary. The finely ground iron ore is then combined with water or a suitable aqueous liquid and mixed using mechanical mixing means to form a homogenous slurry called "pulp". The water used for preparation of the pulp may be tap water, surface water, ground water and/or recycled process water.

In the process according to the invention conventional inverse flotation plant equipment may be used. The process can be executed in any conventional mechanical flotation cells or column cells. While it is possible to conduct the process in mechanical flotation cells especially for ores having a high content of fine particles, as for example P80 of less than 50 µm, the use of column flotation cells has proven to be advantageous. The particle size can be determined by wet sieving according to ASTM E276 - 13 wherein sieves of different openings are used. P80 represents the diameter of openings through which eighty percent of the particles pass while D50 represents the diameter of the particle that 50 wt.-% of a sample's mass is smaller than and 50 wt.-% of a sample's mass is larger than.

The enrichment process can be accomplished in one or more subsequent flotation cells. The collector composition is added to the pulp, preferably in the flotation cell. For conditioning of the dispersed iron ore, a suitable period of conditioning time of the pulp is required, for example at least one minute and sometimes as much as 10 or 15 minutes. Following the conditioning period air is injected at the bottom of the flotation cell and the air bubbles so formed rise to the surface, thereby generating a froth on the surface. The injection of air may be continued until no more froth is formed, which may be for at least one minute and as much as 15 or 20 minutes. The froth is collected and removed from the flotation cell. In a preferred embodiment the treatment of the residual slurry is repeated in a similar manner at least once. Often it is sufficient to repeat the treatment of the residual slurry once. In some instances it has been found to be advantageous to repeat the treatment more often as for example between three and ten times and especially between 4 and 6 times.

The collector composition according to the invention is preferably added to the pulp in an amount of 1 to 1,000 g/to, more preferably in amount of 10 to 500 g/to and especially preferred in an amount of 20 to 100 g/to of ore present in the pulp, as for example in an amount of 1 to 500 g/to, or in an amount of 1 to 100 g/to, or in an amount of 10 to 1,000 g/to, or in an amount of 10 to 100 g/to, or in an amount of 20 to 1,000 g/to, or in an amount of 20 to 500 g/to of ore present in the pulp.

The collector composition may be applied to the flotation pulp as such or as a solution respectively as an emulsion. Preferred solvent respectively dispersion medium is water, although mixtures of water with an alcohol as described above may equally be used. The presences of the water-miscible polyhydric alcohol B) improves the solubility of alkyl ether amines of formula (I) and alkyl ether diamines of formula (II) in water and in the aqueous pulp to a great extent. However, in some cases the solubility of the collector composition in water and/or its dispersibility in the pulp without specific measures such as heating and/or vigorous stirring and consequently the stability of such slurries remain unsatisfactory. A preferred method of further facilitating the dissolving and, thus, further accelerating the flotation process is to prepare an aqueous mixture of the collector composition according to the invention and to partially neutralize the nitrogen groups of the alkyl ether (di)amines for example to at least 20% with an acid as outlined above, for instance, a lower organic acid. Preferred acids are monocarboxylic acids having 1-3 carbon atoms, such as formic acid, acetic acid and propionic acid, and inorganic acids, such as hydrochloric acid. Especially preferred is acetic acid. Complete neutralization is not necessary since high salt contents may cause precipitation. In an aqueous mixture the alkyl ether amine compounds are therefore present suitably in partly neutralized form. For example, 20 to 70 mol-%, preferably 25 to 50 mol-% of the amine groups are neutralized.

Preferably the inverse flotation process is conducted in a pH range of between 7.0 and 12.0, such as between 7.5 and 11.0 and especially between 8.0 and 10.5. This provides the minerals to exhibit the best suited surface charge. The best suited pH to some extent depends on the kind of mineral to be floated: while a pH of 8 has often been proven to be most efficient for the reverse flotation of magnetite a pH of 10 has often proven to be advantageous for the reverse flotation of hematite. The pH is set, for example, by addition of sodium hydroxide.

In a preferred embodiment a depressing agent for the iron ore is added to the pulp in order to avoid iron ore mineral being discharged with the froth. The depressant may be added directly to the pulp or as part of the collector composition. Suitable and preferred iron ore depressants include hydrophilic polysaccharides as for example cellulose ethers, such as methyl cellulose, hydroxyethyl cellulose, ethyl hydroxyethyl cellulose, carboxymethyl cellulose and sulphomethyl cellulose; hydrophilic gums, such as carrageenan, β-glucan, guar gum, xanthan gum, gum arabic, gum karaya, gum tragacanth and gum ghatti, alginates; and starch derivatives, such as carboxymethyl starch and phosphate starch. Especially preferred hydrophilic polysaccharides are gelatinized starches. As starches have only limited solubility in cold water their solubility must be improved, for example in a process known as gelatinization. Starch gelatinization can be realized by thermal gelatinization or alkali gelatinization. Preferred starches for the process according to the invention are maize starch and corn starch activated by treatment with alkali.

If present, the depressing agent is added to the pulp preferably in an amount of about 10 to about 2,500 g per ton of ore and more preferably in an amount of 100 to 1,000 g/to of ore, as for example between 10 and 1,000 g/to or between 100 and 2,500 g/to of ore. Preferably the pulp is conditioned in the presence of the depressant for at least one minute and up to for as much as 10 or 15 minutes as for example 5 minutes prior to the addition of the collector composition comprising the alkyl ether (di)amine (component A) and the water-miscible polyhydric alcohol (component B).

It is also within the scope of the invention to include further additives in the flotation system, such as pH regulating agents, modifiers, dispersants and/or co-collectors. They may serve to give improved dispersion, selectivity and/or flocculation. In a preferred embodiment the pulp contains at least one further additive selected from pH-regulators, modifiers, dispersants and/or co-collectors.

If desired, froth-regulating means can be added on a convenient occasion before the froth flotation. Examples of conventional froth regulators include methylisobutyl carbinol and alcohols having between six and 12 carbon atoms, such as ethylhexanol, and optionally alkoxylated with ethylene oxide and/or propylene oxide.

The collector composition, the process for enriching an iron ore and the use of the composition according to the invention are especially advantageous for the enrichment of magnetite (Fe₃O₄), hematite (Fe₂O₃) and goethite (Fe₂O₃xH₂O). The invention is particularly suitable for the enrichment of hematite and magnetite. Furthermore, the invention is especially advantageous for processing of iron ores, for instance hematite containing high silica contents, for instance at least 20% by weight of iron ore, often at least 30%, and even at least 40% or more, for instance up to 60% or 70% or more. The process is especially suited for crude iron ores containing from 3 % to 50 wt.-% silica and iron from 10 to 65 wt.-%, related to the weight of the ore.

The collector composition according to the invention leads to superior flotation results with a variety of iron ore types. Especially variations occurring in the specific type of iron ore encountered in day-to-day mining operations have been treated successfully. By substitution of part of the alkyl ether amine and/or alkyl ether diamine in a collector composition according to the state of the art with a water-miscible polyhydric alcohol the recovery rate is raised which keeps the treat cost per ton of mineral constant; in some instances the additive treat rate could even be reduced. This is also valid for the execution of the invention at low temperatures.

When the compositions according to the invention are used as collectors in an inverse flotation process a higher selectivity in removal of silicate is achieved by comparison to commercially available or other known alkyl ether amines or other known collectors. In fact, the collectors of the present invention enable a higher proportion of the iron to be retained and a higher proportion of the silicate to be removed. Furthermore, the froth formed by the collector composition according to the invention is less voluminous and after separation from the flotation cell it collapses much faster which allows for reduced storage volumes and/or higher throughput.

### Examples

The percentages given refer to percent by weight unless indicated otherwise.

Materials used

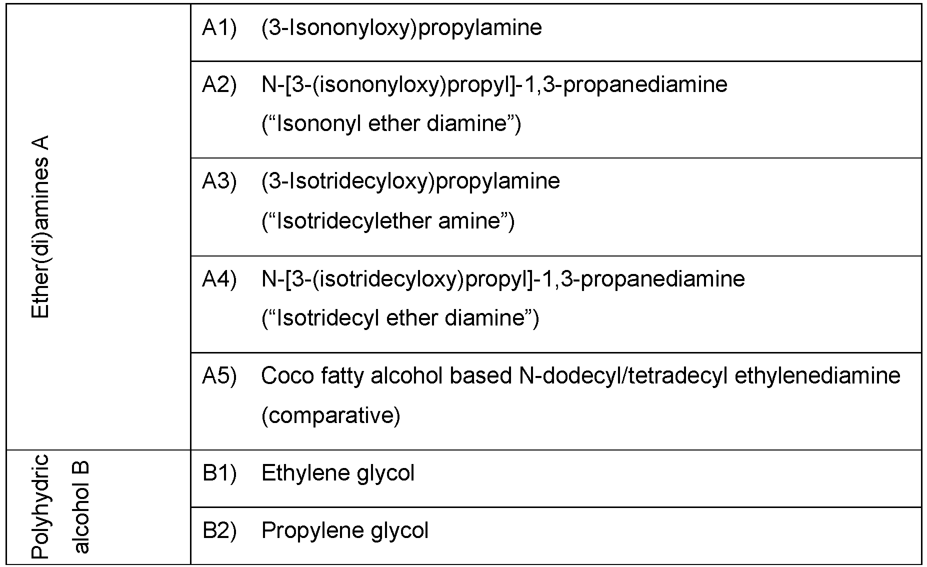

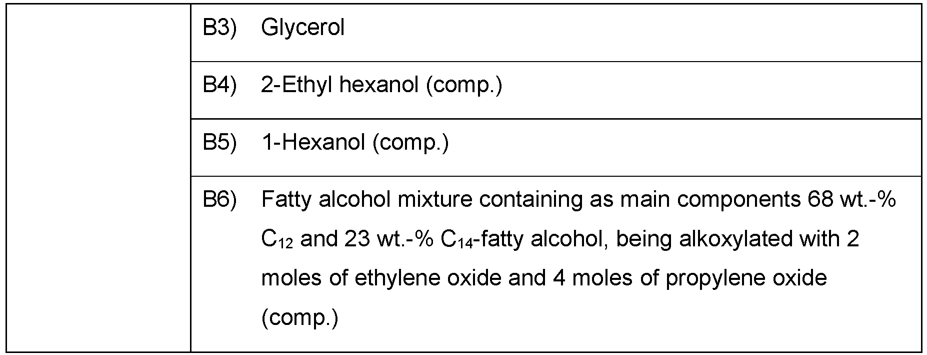

From the components A1 to A5 and B1 to B5 the various collector compositions given in Table 1 were prepared by mixing the components in the given weight ratios at 20°C.

**Table1: Composition and characterization of collector compositions**

| Composition | A | B |
|---|---|---|
| CC1 | 80 % A1 | 20 % B3 |
| CC2 | 70 % A1 | 30 % B3 |
| CC3 | 90 % A1 | 10 % B3 |
| CC4 | 95 % A1 | 5 % B3 |
| CC5 | 80 % A1 | 20 % B1 |
| CC6 | 80 % A1 | 20 % B2 |
| CC7 | 80 % A2 | 20 % B3 |
| CC8 | 80 % A3 | 20 % B3 |
| CC9 | 80 % A4 | 20 % B3 |
| CC10 (comp.) | 80 % A5 | 20 % B3 |
| CC11 (comp.) | 100 % A1 | - |
| CC12 (comp.) | 100 % A2 | - |
| CC13 (comp.) | 100 % A3 | - |
| CC14 (comp.) | 100 % A4 | - |
| CC15 (comp.) | 100 % A5 | - |
| CC16 (comp.) | 80 % A1 | 20 % B4 |
| CC17 (comp.) | 80 % A1 | 20 % B5 |
| CC18 (comp.) | 80 % A1 | 20 % B6 |

| | | |
|---|---|---|
| comp. = comparative experiments, not according to the invention. | | |

The collector compositions according to Table 1 were tested in reverse iron ore flotation. The iron ore samples used for this study were characterized in terms of chemical analysis and particle size analysis with the results given in Table 2 (hereinafter also referred to as crude iron ore).

The content of SiO₂ in the ores was determined by a gravimetric method. The ore was decomposed by an acid attack (HCl) leading to the dissolution of metal oxides and metal hydroxides, and leaving insoluble SiO₂ as the residue.

The iron content of the ores was determined by a titration method wherein the sample was decomposed by an acid attack (HCl), trivalent iron was reduced to bivalent iron by addition of stannous chloride (SnCl₂) and mercury chloride (HgCl) and the iron content was determined by titration with potassium dichromate (K₂Cr₂O₇).

The particle size was determined by wet sieving acording to ASTM E276 - 13 wherein sieves of different openings were used. The results of this analysis are given in the table 2 below. P80 represents the diameter of openings through which eighty percent of the particles pass; D50 represents the diameter of the particle that 50 wt.-% of a sample's mass is smaller than and 50 wt.-% of a sample's mass is larger than; %-38 µm represents the percentage of particles smaller than 38 µm.

**Table 2: Characterization of the crude iron ores used for flotation tests**

| | iron ore 1 | iron ore 2 |
|---|---|---|
| iron content | 43.0 % | 41.2% |
| SiO₂ content | 34.8 % | 41.0% |
| P80 | 97 µm | 137 µm |
| D50 | 49 µm | 69 µm |
| %-38µm | 39.6 % | 22.0 % |

The flotation tests were done in laboratory scale using a Denver Flotation Cell D12 apparatus at a temperature of about 25°C according to the following procedure: A sample with 1.1 kilograms of the respective crude iron ore was charged to the flotation cell of 1.5 l volume and water was added in order to prepare a pulp of 50 wt.-% of solids content. The stirrer was set to a speed of 1100 rpm and the pulp was homogenized for 1 minute. Then, a depressant (corn starch alkalized with NaOH in a weight ratio of starch to NaOH of 5:1) was added in a dosage rate of 600 mg/kg in respect to the dried ore. The pulp was conditioned under stirring for 5 minutes. The pH of the pulp was controlled and, if necessary, adjusted to 10.0 by further addition of NaOH. A collector composition according to Table 1 was added in a dosage of 70 mg/kg of dry ore for crude iron ore 1 respectively 120 mg/kg for crude iron ore 2. For ease of handling the collector compositions were applied as aqueous solutions of 1 wt.-% by weight active. The collector was conditioned in the ore pulp for 1 minute. Then air flow was started and froth flotation was done for 3 minutes. The floated mass (tailings) and the depressed mass (concentrated iron ore) were collected in separate bowls and dried in a lab oven. Both samples (depressed and floated) were then analyzed in respect to weight, SiO₂ content and iron content according to the methods described above.

The results are given in terms of the following parameters:
- Yield (wt.-%): percentage of concentrated ore (depressed mass) in relation to the total mass of crude iron ore.
- SiO₂ content (wt.-%): content of SiO2 present in the concentrated iron ore (depressed mass).
- Fe.Rec. (wt.-%): weight ratio of iron mass recovered in the concentrated iron ore (depressed mass) in relation to the total mass of iron in the crude iron ore.

**Table 3: Results of flotation experiments with iron ore 1**

| Example | Collector | Dosage [g/to] | yield [wt.-%] | SiO₂ content [wt.-%] | Fe. Rec [wt.-%] |
|---|---|---|---|---|---|
| 1 | CC1 | 70 | 48.1 | 2.96 | 72.2 |
| 2 | CC2 | 70 | 48.9 | 2.92 | 72.6 |
| 3 | CC3 | 70 | 47.3 | 2.84 | 71.3 |
| 4 | CC4 | 70 | 47.1 | 2.81 | 71.4 |
| 5 | CC7 | 70 | 44.3 | 1.14 | 67.4 |
| 6 (comp.) | CC11 (comp.) | 70 | 43.7 | 2.99 | 65.2 |
| 7 (comp.) | CC12 (comp.) | 70 | 40.4 | 1.57 | 61.4 |

| | | | | | |
|---|---|---|---|---|---|
| comp. = comparative experiments, not according to the invention. | | | | | |

**Table 4: Results of flotation experiments with iron ore 2**

| Example | Collector | Dosage [g/to] | yield [wt.-%] | SiO₂ content [wt.-%] | Fe. Rec [wt.-%] |
|---|---|---|---|---|---|
| 8 | CC1 | 120 | 39.0 | 2.73 | 65.8 |
| 9 | CC5 | 120 | 38.6 | 3.18 | 64.6 |
| 10 | CC6 | 120 | 38.1 | 3.30 | 63.1 |
| 11 | CC8 | 120 | 45.8 | 1.24 | 75.2 |
| 12 | CC9 | 120 | 46.4 | 1.35 | 75.7 |
| 13 (comp.) | CC10 (comp.) | 120 | 76.0 | 35.4 | 83.4 |
| 14 (comp.) | CC11 (comp.) | 120 | 37.4 | 3.38 | 62.0 |
| 15 (comp.) | CC13 (comp.) | 120 | 43.9 | 1.69 | 73.7 |
| 16 (comp.) | CC14 (comp.) | 120 | 44.3 | 1.78 | 74.0 |
| 17 (comp.) | CC15 (comp.) | 120 | 75.5 | 32.3 | 86.6 |
| 18 (comp.) | CC16 (comp.) | 120 | 41.2 | 4.05 | 67.6 |
| 19 (comp.) | CC17 (comp.) | 120 | 41.8 | 4.24 | 68.2 |
| 20 (comp.) | CC18 (comp.) | 120 | 42.3 | 4.67 | 71.2 |

| | | | | | |
|---|---|---|---|---|---|
| comp. = comparative experiments, not according to the invention. | | | | | |

In this table, e.g. comparative Example 15 is to be compared to Example 11. It becomes apparent that in Example 11 the yield is higher, the SiO₂ content is lower and the Fe recovery is higher than in comparative Example 15.

Performance testing at different temperatures

Flotation tests according to the general description given above were repeated at different temperatures. The results are given in Table 5.

**Table 5: Results of flotation tests at different temperatures with iron ore 1**

| Example | Collector | dosage [g/to] | temperature [°C] | yield [wt.-%] | SiO₂ content [wt.-%] | Fe. Rec [wt.-%] |
|---|---|---|---|---|---|---|
| 21 | CC1 | 70 | 25 | 48.1 | 2.96 | 72.2 |
| 22 | CC1 | 70 | 5 | 49.7 | 2.83 | 74.3 |
| 23 | CC7 | 70 | 25 | 44.3 | 1.14 | 67.4 |
| 24 | CC7 | 70 | 5 | 44.2 | 1.32 | 68.0 |
| 25 (comp.) | CC11 | 70 | 25 | 43.7 | 2.99 | 65.2 |
| 26 (comp.) | CC11 | 70 | 5 | 61.9 | 13.82 | 82.5 |
| 27 (comp.) | CC12 | 70 | 25 | 40.4 | 1.57 | 61.4 |
| 28 (comp.) | CC12 | 70 | 5 | 47.5 | 7.28 | 69.3 |

| | | | | | | |
|---|---|---|---|---|---|---|
| comp. = comparative experiments, not according to the invention. | | | | | | |

### Evaluation of foaming behavior

Determination of the collector compositions foaming behavior was evaluated using the following procedure: a pulp consisting of 50 g of crude iron ore 1 and 50 g of tap water was prepared in a graduated cylinder. A 1 wt.-% active solution of the collector composition according to Table 1 was added to the pulp in a dosage of 50 mg/kg of ore. The cylinder was tilted 15 times with an angle of 180° within 20±2 seconds. Immediately after the last movement a chronometer was started. The foam height was measured immediately and after 30 seconds, 1 minute, 2 minutes, 3 minutes, 4 minutes, 5 minutes and 10 minutes. The results are given in Table 6.

**Table 6: Collapse time of the froth obtained**

| Example | Collector | foam height [mm] | | | | | | |
|---|---|---|---|---|---|---|---|---|
| | | t=0 | ½ min | 1 min | 2 min | 3 min | 5 min | 10 min |
| 29 | CC1 | 19 | 13 | 11 | 10 | 10 | 10 | 10 |
| 30 | CC7 | 20 | 19 | 17 | 14 | 14 | 14 | 14 |
| 31 | CC11 | 24 | 20 | 19 | 17 | 17 | 17 | 17 |
| 32 | CC12 | 26 | 22 | 21 | 19 | 19 | 19 | 19 |
| 33 | CC15 | 70 | 63 | 60 | 58 | 58 | 58 | 58 |

The experimental results show that by substitution of part of the alkyl ether amine and/or alkyl ether diamine with a water-miscible polyhydric alcohol the recovery rate of iron is raised, i.e. a higher proportion of the iron is retained. Simultaneously the content of SiO₂ in the concentrate is reduced. Taken together the selectivity of the process is improved.

Although giving a superior iron recovery rate the froth formed with the collector compositions according to the invention has a lower initial volume and afterwards collapses faster than the froth formed by the application of alkyl ether amine (I) respectively alkyl ether diamine (II) in absence of the water-miscible polyhydric alcohol.

With the collector compositions according to the invention the superior performance is maintained under cold weather conditions while the ether(di)amine alone loses its selectivity at low temperatures. This is particularly important for many major mining operations located in areas with cold winters as for example in Northern US states as Michigan, Minnesota, and in Canada.

## Claims

1. The use of a water-miscible polyhydric alcohol (component B) having two or three hydroxyl groups for improving the collector performance of a collector composition for the reverse iron ore flotation (component A) comprising at least one alkyl ether amine of formula (I) and/or alkyl ether diamine of formula (II)
R¹-(O-A)-NH₂ (I)
R²-(O-A)-NH-R³-NH₂ (II)
wherein
R¹ is a hydrocarbyl group with 6 to 24 carbon atoms,
R² is a hydrocarbyl group with 6 to 24 carbon atoms,
R³ is an aliphatic hydrocarbyl group with 2 to 4 carbon atoms
A is an alkylene group with 2 to 6 carbon atoms,
wherein the water- miscible polyhydric alcohol (component B) having two or three hydroxyl groups is selected from the group consisting of ethylene glycol propylene glycol, butylene glycol, pentanediol, neopentyl glycol, hexanediol, glycerol, diethylene glycol and triethylene glycol,
wherein the term "improving the collector performance" means
(i) an increase of recovery rate of iron ore when the water-miscible polyhydric alcohol having two or three hydroxyl groups is present, compared to the case when said alcohol is absent;
(ii) a higher selectivity in removal of silicate, which means that the collector composition comprising the water-miscible polyhydric alcohol enables a higher proportion of the iron to be retained and a higher proportion of the silicate to be removed, compared to the case when said alcohol is absent;
(iii) that the amount of iron retained and the amount of silicate removed in the flotation process according to the second aspect in the presence of the water-miscible polyhydric alcohol remains essentially unchanged when the temperature at which said process is executed drops to temperatures of below 10 °C, preferably down to 5 °C, or even below 5 °C, compared to the case when said alcohol is absent in which case the amount of iron retained and the silicate removed becomes poorer;
(iv) that the froth formed by the collector composition comprising the water-miscible polyhydric alcohol is less voluminous, and after separation from the flotation cell it collapses faster, compared to the case when said alcohol is absent, and wherein
improvement of collector performance and improving the collector performance is assumed to occur if one or more of conditions (i) to (iv) are met.

2. The use according to claim 1, wherein R¹ and R² independently from each other comprise 7 to 18 carbon atoms.

3. The use according to claim 1 and/or 2, wherein component A) is an alkyl ether amine of formula (I).

4. The use according to claim 1 and/or 2, wherein component A) is an alkyl ether diamine of formula (II).

5. The use according to claim 1 and/or 2, wherein component A) is a mixture of an alkyl ether amine of formula (I) and an alkyl ether diamine of formula (II).

6. The use according to one or more of claims 1 to 5, wherein R¹ and/or R² independently from each other are aliphatic hydrocarbyl residues.

7. The use according to one or more of claims 1 to 6, wherein R¹ and/or R² are linear or branched hydrocarbyl residues.

8. The use according to one or more of claims 1 to 7, wherein the alkyl ether amine (I) and/or the alkyl ether diamine (II) is derived from a branched synthetic alcohol.

9. The use according to one or more of claims 1 to 8, wherein A is a group of the formula -CH₂-CH₂- or of the formula -CH₂-CH₂-CH₂-.

10. The use according to one or more of claims 1 to 9, wherein R² is a group of the formula -CH₂-CH₂- or of the formula -CH₂-CH₂-CH₂-.

11. The use according to one or more of claims 1 to 10, wherein the alkyl ether amine (I) and/or the alkyl ether diamine have been partially neutralized.

12. The use according to claim 11, wherein the acid used for neutralization of the alkyl ether amine (I) and/or the alkyl ether diamine is a carboxylic acid having between 1 and 6 carbon atoms, preferably acetic acid.

13. The use according to one or more of claims 1 to 12, wherein R¹ and/or R² is a branched alkyl residue.

14. The use according to claim 5, wherein the collector composition comprises an alkyl ether amine of formula (I) and an alkyl ether diamine of formula (II) in a weight ratio between 1:100 and 100:1.

15. The use according to one or more of claims 1 to 14, wherein the water-miscible polyhydric alcohol is selected from the group consisting of ethylene glycol, propylene glycol and glycerol.

16. The use according to claim 15, wherein the water-miscible polyhydric alcohol is selected from ethylene glycol and glycerol.

17. The use according to one or more of claims 1 to 16, wherein the composition contains 50 - 99 wt.-% of the alkyl ether amine (I) and/ or the alkyl ether diamine (II) and 1 to 50 wt.-% of the water-miscible polyhydric alcohol (component B) are present.

18. The use according to one or more of claims 1 to 17, further comprising a depressing agent for the iron ore.

19. The use according to one or more of claims 1 to 18, further comprising a dispersant, a chain extender, a frother, a defoamer, a co-collector and/or a depressant.

20. The use according to one or more of claims 1 to 19, wherein the components A and B are added to the pulp in a total amount of 1 to 1,000 g/to in respect to the amount of iron ore present.

21. The use according to one or more of claims 1 to 20, wherein the iron ore is selected from the group consisting of magnetite, hematite and goethite.

22. The use according to one or more of claims 1 to 21, wherein a pH regulating agent, a modifier, a dispersant and/or a depressant is present in the pulp.

23. A process for improving the collector performance of a collector composition for enriching an iron ore through reverse flotation of a silicate containing iron ore, the collector composition comprising at least one alkyl ether amine of formula (I) and/or alkyl ether diamine of formula (II)
R¹-(O-A)-NH₂ (I)
R²-(O-A)-NH-R³-NH₂ (II)
wherein
R¹ is a hydrocarbyl group with 6 to 24 carbon atoms,
R² is a hydrocarbyl group with 6 to 24 carbon atoms,
R³ is an aliphatic hydrocarbyl group with 2 to 4 carbon atoms
A is an alkylene group with 2 to 6 carbon atoms,
**characterized in that** the process comprises adding to the collector composition at least one water-miscible polyhydric alcohol having two or three hydroxyl groups,
wherein the water- miscible polyhydric alcohol (component B) having two or three hydroxyl groups is selected from the group consisting of ethylene glycol propylene glycol, butylene glycol, pentanediol, neopentyl glycol, hexanediol, glycerol, diethylene glycol and triethylene glycol,
wherein the term "improving the collector performance" means
(i) an increase of recovery rate of iron ore when the water-miscible polyhydric alcohol having two or three hydroxyl groups is present, compared to the case when said alcohol is absent;
(ii) a higher selectivity in removal of silicate, which means that the collector composition comprising the water-miscible polyhydric alcohol enables a higher proportion of the iron to be retained and a higher proportion of the silicate to be removed, compared to the case when said alcohol is absent;
(iii) that the amount of iron retained and the amount of silicate removed in the flotation process according to the second aspect in the presence of the water-miscible polyhydric alcohol remains essentially unchanged when the temperature at which said process is executed drops to temperatures of below 10 °C, preferably down to 5 °C, or even below 5 °C, compared to the case when said alcohol is absent in which case the amount of iron retained and the silicate removed becomes poorer;
(iv) that the froth formed by the collector composition comprising the water-miscible polyhydric alcohol is less voluminous, and after separation from the flotation cell it collapses faster, compared to the case when said alcohol is absent, and wherein
improvement of collector performance and improving the collector performance is assumed to occur if one or more of conditions (i) to (iv) are met.

24. The process according to claim 23, wherein the component A and component B are added to the pulp in a total amount of 1 to 1,000 g/to in respect to the amount of iron ore present.

25. The process according to one or more of claims 23 and/or 24, wherein the iron ore is selected from the group consisting of magnetite, hematite and goethite.

26. The process according to one or more of claims 23 to 25, wherein a dispersant, a chain extender, a frother, a defoamer, a co-collector and/or a depressant is present in the pulp.

## Patentansprüche

1. Verwendung eines wassermischbaren polyhydrischen Alkohols (Komponente B) mit zwei oder drei Hydroxygruppen zum Verbessern der Sammlerleistung einer Sammlerzusammensetzung für die inverse Eisenerzflotation (Komponente A), die wenigstens ein Alkyletheramin der Formel (I) und/oder Alkyletherdiamin der Formel (II) umfasst,
R¹- (O-A) -NH₂ (I)
R²- (O-A) -NH-R³-NH₂ (II)
wobei
R¹ eine Hydrocarbylgruppe mit 6 bis 24 Kohlenstoffatomen ist,
R² eine Hydrocarbylgruppe mit 6 bis 24 Kohlenstoffatomen ist,
R³ eine aliphatische Hydrocarbylgruppe mit 2 bis 4 Kohlenstoffatomen ist,
A eine Alkylengruppe mit 2 bis 6 Kohlenstoffatomen ist,
wobei der wassermischbare polyhydrische Alkohol (Komponente B) mit zwei oder drei Hydroxygruppen ausgewählt ist aus der Gruppe bestehend aus Ethylenglycol, Propylenglycol, Butylenglycol, Pentandiol, Neopentylglycol, Hexandiol, Glycerol, Diethylenglycol und Triethylenglycol,
wobei der Begriff "Verbessern der Sammlerleistung" bedeutet:
(i) eine Erhöhung der Gewinnungsrate von Eisenerz, wenn der wassermischbare polyhydrische Alkohol mit zwei oder drei Hydroxygruppen vorhanden ist, im Vergleich zu dem Fall, bei dem der Alkohol nicht vorhanden ist;
(ii) eine höhere Selektivität bei dem Entfernen von Silicat, was bedeutet, dass die Sammlerzusammensetzung, die den wassermischbaren polyhydrischen Alkohol umfasst, ermöglicht, dass ein höherer Anteil des Eisens zurückgehalten wird und ein höherer Anteil des Silicats entfernt wird, im Vergleich zu dem Fall, bei dem der Alkohol nicht vorhanden ist;
(iii) dass die Menge an zurückgehaltenem Eisen und die Menge an entferntem Silicat bei dem Flotationsverfahren gemäß der zweiten Erscheinungsform in Gegenwart des wassermischbaren polyhydrischen Alkohols im Wesentlichen unverändert bleibt, wenn die Temperatur, bei der das Verfahren durchgeführt wird, auf Temperaturen unter 10 °C fällt, vorzugsweise auf 5 °C oder sogar unter 5 °C, im Vergleich zu dem Fall, bei dem der Alkohol nicht vorhanden ist, in welchem Fall die Menge an zurückgehaltenem Eisen und an entferntem Silicat schlechter wird;
(iv) dass der von der Sammlerzusammensetzung gebildete Schaum, der den wassermischbaren polyhydrischen Alkohol umfasst, weniger voluminös ist, und dass er nach Trennung von der Flotationszelle schneller kollabiert, im Vergleich zu dem Fall, bei dem der Alkohol nicht vorhanden ist, und wobei
Verbesserung der Sammlerleistung und Verbessern der Sammlerleistung angenommen wird, wenn eine oder mehrere der Bedingungen (i) bis (iv) erfüllt sind.

2. Verwendung gemäß Anspruch 1, wobei R¹ und R² unabhängig voneinander 7 bis 18 Kohlenstoffatome umfassen.

3. Verwendung gemäß Anspruch 1 und/oder 2, wobei Komponente A) ein Alkyletheramin der Formel (I) ist.

4. Verwendung gemäß Anspruch 1 und/oder 2, wobei Komponente A) ein Alkyletherdiamin der Formel (II) ist.

5. Verwendung gemäß Anspruch 1 und/oder 2, wobei Komponente A) ein Gemisch eines Alkyletheramins der Formel (I) und eines Alkyletherdiamins der Formel (II) ist.

6. Verwendung gemäß einem oder mehreren der Ansprüche 1 bis 5, wobei R¹ und/oder R² unabhängig voneinander aliphatische Hydrocarbylreste sind.

7. Verwendung gemäß einem oder mehreren der Ansprüche 1 bis 6, wobei R¹ und/oder R² lineare oder verzweigte Hydrocarbylreste sind.

8. Verwendung gemäß einem oder mehreren der Ansprüche 1 bis 7, wobei das Alkyletheramin (I) und/oder das Alkyletherdiamin (II) von einem verzweigten synthetischen Alkohol abgeleitet sind.

9. Verwendung gemäß einem oder mehreren der Ansprüche 1 bis 8, wobei A eine Gruppe der Formel -CH₂-CH₂- oder der Formel -CH₂-CH₂-CH₂- ist.

10. Verwendung gemäß einem oder mehreren der Ansprüche 1 bis 9, wobei R² eine Gruppe der Formel -CH₂-CH₂- oder der Formel -CH₂-CH₂-CH₂- ist.

11. Verwendung gemäß einem oder mehreren der Ansprüche 1 bis 10, wobei das Alkyletheramin (I) und/oder das Alkyletherdiamin teilweise neutralisiert worden sind.

12. Verwendung gemäß Anspruch 11, wobei die zur Neutralisation des Alkyletheramins (I) und/oder des Alkyletherdiamins (II) verwendet Säure eine Carbonsäure mit zwischen 1 und 6 Kohlenstoffatomen, vorzugsweise Essigsäure, ist.

13. Verwendung gemäß einem oder mehreren der Ansprüche 1 bis 12, wobei R¹ und/oder R² ein verzweigter Alkylrest ist.

14. Verwendung gemäß Anspruch 5, wobei die Sammlerzusammensetzung ein Alkyletheramin der Formel (I) und ein Alkyletherdiamin der Formel (II) in einem Gewichtsverhältnis zwischen 1:100 und 100:1 umfasst.

15. Verwendung gemäß einem oder mehreren der Ansprüche 1 bis 14, wobei der wassermischbare polyhydrische Alkohol ausgewählt ist aus der Gruppe bestehend aus Ethylenglycol, Propylenglycol und Glycerol.

16. Verwendung gemäß Anspruch 15, wobei der wassermischbare polyhydrische Alkohol ausgewählt ist aus Ethylenglycol und Glycerol.

17. Verwendung gemäß einem oder mehreren der Ansprüche 1 bis 16, wobei die Zusammensetzung 50-99 Gew.-% an dem Alkyletheramin (I) und/oder dem Alkyletherdiamin (II) enthält und 1 bis 50 Gew.-% an dem wassermischbaren polyhydrischen Alkohol (Komponente B) vorhanden sind.

18. Verwendung gemäß einem oder mehreren der Ansprüche 1 bis 17, ferner umfassend einen Drücker für das Eisenerz.

19. Verwendung gemäß einem oder mehreren der Ansprüche 1 bis 18, ferner umfassend ein Dispergiermittel, einen Kettenverlängerer, einen Schäumer, einen Entschäumer, einen Co-Sammler und/oder einen Drücker.

20. Verwendung gemäß einem oder mehreren der Ansprüche 1 bis 19, wobei die Komponenten A und B zu der Aufschlämmung in einer Gesamtmenge von 1 bis 1.000 g/t, bezogen auf die Menge an vorhandenem Eisenerz, zugegeben werden.

21. Verwendung gemäß einem oder mehreren der Ansprüche 1 bis 20, wobei das Eisenerz ausgewählt ist aus der Gruppe bestehend aus Magnetit, Hämatit und Goethit.

22. Verwendung gemäß einem oder mehreren der Ansprüche 1 bis 21, wobei ein pH-Regulator, ein Modifikator, ein Dispergiermittel und/oder ein Drücker in der Aufschlämmung vorhanden ist.

23. Verfahren zum Verbessern der Sammlerleistung einer Sammlerzusammensetzung zum Anreichern eines Eisenerzes durch inverse Flotation eines silicathaltigen Eisenerzes, wobei die Sammlerzusammensetzung wenigstens ein Alkyletheramin der Formel (I) und/oder Alkyletherdiamin der Formel (II) umfasst,
R¹- (O-A) -NH₂ (I)
R²- (O-A) -NH-R³-NH₂ (II)
wobei
R¹ eine Hydrocarbylgruppe mit 6 bis 24 Kohlenstoffatomen ist,
R² eine Hydrocarbylgruppe mit 6 bis 24 Kohlenstoffatomen ist,
R³ eine aliphatische Hydrocarbylgruppe mit 2 bis 4 Kohlenstoffatomen ist,
A eine Alkylengruppe mit 2 bis 6 Kohlenstoffatomen ist,
**dadurch gekennzeichnet, dass** das Verfahren Zugeben wenigstens eines wassermischbaren polyhydrischen Alkohols mit zwei oder drei Hydroxygruppen zu der Sammlerzusammensetzung umfasst,
wobei der wassermischbare polyhydrische Alkohol (Komponente B) mit zwei oder drei Hydroxygruppen ausgewählt ist aus der Gruppe bestehend aus Ethylenglycol, Propylenglycol, Butylenglycol, Pentandiol, Neopentylglycol, Hexandiol, Glycerol, Diethylenglycol und Triethylenglycol,
wobei der Begriff "Verbessern der Sammlerleistung" bedeutet:
(i) eine Erhöhung der Gewinnungsrate von Eisenerz, wenn der wassermischbare polyhydrische Alkohol mit zwei oder drei Hydroxygruppen vorhanden ist, im Vergleich zu dem Fall, bei dem der Alkohol nicht vorhanden ist;
(ii) eine höhere Selektivität bei dem Entfernen von Silicat, was bedeutet, dass die Sammlerzusammensetzung, die den wassermischbaren polyhydrischen Alkohol umfasst, ermöglicht, dass ein höherer Anteil des Eisens zurückgehalten wird und ein höherer Anteil des Silicats entfernt wird, im Vergleich zu dem Fall, bei dem der Alkohol nicht vorhanden ist;
(iii) dass die Menge an zurückgehaltenem Eisen und die Menge an entferntem Silicat bei dem Flotationsverfahren gemäß der zweiten Erscheinungsform in Gegenwart des wassermischbaren polyhydrischen Alkohols im Wesentlichen unverändert bleibt, wenn die Temperatur, bei der das Verfahren durchgeführt wird, auf Temperaturen unter 10 °C fällt, vorzugsweise auf 5 °C oder sogar unter 5 °C, im Vergleich zu dem Fall, bei dem der Alkohol nicht vorhanden ist, in welchem Fall die Menge an zurückgehaltenem Eisen und an entferntem Silicat schlechter wird;
(iv) dass der von der Sammlerzusammensetzung gebildete Schaum, der den wassermischbaren polyhydrischen Alkohol umfasst, weniger voluminös ist, und dass er nach Trennung von der Flotationszelle schneller kollabiert, im Vergleich zu dem Fall, bei dem der Alkohol nicht vorhanden ist, und wobei
Verbesserung der Sammlerleistung und Verbessern der Sammlerleistung angenommen wird, wenn eine oder mehrere der Bedingungen (i) bis (iv) erfüllt sind.

24. Verfahren gemäß Anspruch 23, wobei die Komponenten A und die Komponente B zu der Aufschlämmung in einer Gesamtmenge von 1 bis 1.000 g/t, bezogen auf die Menge an vorhandenem Eisenerz, zugegeben werden.

25. Verfahren gemäß einem oder mehreren der Ansprüche 23 und/oder 24, wobei das Eisenerz ausgewählt ist aus der Gruppe bestehend aus Magnetit, Hämatit und Goethit.

26. Verfahren gemäß einem oder mehreren der Ansprüche 23 bis 25, wobei ein Dispergiermittel, ein Kettenverlängerer, ein Schäumer, ein Entschäumer, ein Co-Sammler und/oder ein Drücker in der Aufschlämmung vorhanden ist.

## Revendications

1. Utilisation d'un alcool polyhydrique miscible à l'eau (composant B) ayant deux ou trois groupes hydroxyle pour améliorer la performance de collecteur d'une composition de collecteur pour la flottation inverse de minerai de fer (composant A) comprenant au moins une alkylétheramine de formule (I) et/ou alkylétherdiamine de formule (II)
**R¹-(O-A)-NH₂** **(I)**
**R²-(O-A)-NH-R³-NH₂** **(II)**
R¹ étant un groupe hydrocarbyle comportant 6 à 24 atomes de carbone,
R² étant un groupe hydrocarbyle comportant 6 à 24 atomes de carbone,
R³ étant un groupe hydrocarbyle aliphatique comportant 2 à 4 atomes de carbone,
A étant un groupe alkylène comportant 2 à 6 atomes de carbone,
l'alcool polyhydrique miscible à l'eau (composant B) ayant deux ou trois groupes hydroxyle étant choisi dans le groupe constitué par l'éthylène glycol, le propylèneglycol, le butylèneglycol, le pentanediol, le néopentylglycol, l'hexanediol, le glycérol, le diéthylèneglycol et le triéthylèneglycol,
les termes « améliorer la performance de collecteur » signifiant
(i) une augmentation du taux de récupération de minerai de fer lorsque l'alcool polyhydrique miscible à l'eau ayant deux ou trois groupes hydroxyle est présent, par comparaison avec le cas où ledit alcool est absent ;
(ii) une sélectivité plus élevée dans l'élimination de silicate, ce qui signifie que la composition de collecteur comprenant l'alcool polyhydrique miscible à l'eau permet à une proportion plus élevée du fer d'être retenue et une proportion plus élevée du silicate d'être éliminée, par comparaison avec le cas où ledit alcool est absent ;
(iii) que la quantité de fer retenue et la quantité de silicate éliminée dans le procédé de flottation selon le deuxième aspect en la présence de l'alcool polyhydrique miscible à l'eau reste essentiellement inchangée lorsque la température à laquelle ledit procédé est exécuté chute jusqu'à des températures inférieures à 10 °C, préférablement jusqu'à 5 °C, ou même en dessous de 5 °C, par comparaison avec le cas où ledit alcool est absent auquel cas la quantité de fer retenue et la quantité de silicate éliminée devient plus faible ;
(iv) que l'écume formée par la composition de collecteur comprenant l'alcool polyhydrique miscible à l'eau est moins volumineuse, et après séparation de la cellule de flottation, elle se désintègre plus vite, par comparaison avec le cas où ledit alcool est absent, et
une amélioration de performance de collecteur et une amélioration de la performance de collecteur étant supposées avoir lieu si l'une ou plusieurs des conditions (i) à (iv) sont satisfaites.

2. Utilisation selon la revendication 1, R¹ et R² indépendamment l'un de l'autre comprenant 7 à 18 atomes de carbone.

3. Utilisation selon la revendication 1 et/ou 2, le composant A) étant une alkylétheramine de formule (I) .

4. Utilisation selon la revendication 1 et/ou 2, le composant A) étant une alkylétherdiamine de formule (II).

5. Utilisation selon la revendication 1 et/ou 2, le composant A) étant un mélange d'une alkylétheramine de formule (I) et d'une alkylétherdiamine de formule (II).

6. Utilisation selon l'une ou plusieurs des revendications 1 à 5, R¹ et/ou R² indépendamment l'un de l'autre étant des radicaux hydrocarbyle aliphatique.

7. Utilisation selon l'une ou plusieurs des revendications 1 à 6, R¹ et/ou R² étant des radicaux hydrocarbyle linéaires ou ramifiés.

8. Utilisation selon l'une ou plusieurs des revendications 1 à 7, l'alkylétheramine (I) et/ou l'alkylétherdiamine étant issue d'un alcool synthétique ramifié.

9. Utilisation selon l'une ou plusieurs des revendications 1 à 8, A étant un groupe de la formule **-CH₂-CH₂-** ou de la formule **-CH₂-CH₂-CH₂-.**

10. Utilisation selon l'une ou plusieurs des revendications 1 à 9, R² étant un groupe de la formule **-CH2-CH2-** ou de la formule **-CH₂-CH₂-CH₂**-.

11. Utilisation selon l'une ou plusieurs des revendications 1 à 10, l'alkylétheramine (I) et/ou l'alkylétherdiamine ayant été partiellement neutralisées.

12. Utilisation selon la revendication 11, l'acide utilisé pour la neutralisation de l'alkylétheramine (I) et/ou l'alkylétherdiamine étant un acide carboxylique ayant entre 1 et 6 atomes de carbone, préférablement l'acide acétique.

13. Utilisation selon l'une ou plusieurs des revendications 1 à 12, R¹ et/ou R² étant un radical alkyle ramifié.

14. Utilisation selon la revendication 5, la composition de collecteur comprenant une alkylétheramine de formule (I) et une alkylétherdiamine de formule (II) en un rapport en poids compris entre 1 : 100 et 100 : 1.

15. Utilisation selon l'une ou plusieurs des revendications 1 à 14, l'alcool polyhydrique miscible à l'eau étant choisi dans le groupe constitué par l'éthylèneglycol, le propylèneglycol et le glycérol.

16. Utilisation selon la revendication 15, l'alcool polyhydrique miscible à l'eau étant choisi parmi l'éthylèneglycol et le glycérol.

17. Utilisation selon l'une ou plusieurs des revendications 1 à 16, la composition contenant 50 à 99 % en poids de l' alkylétheramine (I) et/ou de l'alkylétherdiamine et 1 à 50 % en poids de l'alcool polyhydrique miscible à l'eau (composant B) étant présents.

18. Utilisation selon l'une ou plusieurs des revendications 1 à 17, comprenant en outre un agent dépresseur pour le minerai de fer.

19. Utilisation selon l'une ou plusieurs des revendications 1 à 18, comprenant en outre un dispersant, un agent d'extension de chaîne, un mousseur, un agent antimousse, un co-collecteur et/ou un dépresseur.

20. Utilisation selon l'une ou plusieurs des revendications 1 à 19, les composants A et B étant ajoutés à la pâte en une quantité totale de 1 à 1 000 g/t par rapport à la quantité de minerai de fer présente.

21. Utilisation selon l'une ou plusieurs des revendications 1 à 20, le minerai de fer étant choisi dans le groupe constitué par la magnétite, l'hématite et la goethite.

22. Utilisation selon l'une ou plusieurs des revendications 1 à 21, un agent de régulation du pH, un agent de modification, un dispersant et/ou un dépresseur étant présent dans la pâte.

23. Procédé pour l'amélioration de la performance de collecteur d'une composition de collecteur pour l'enrichissement d'un minerai de fer par le biais d'une flottation inverse d'un minerai de fer contenant un silicate, la composition de collecteur comprenant au moins une alkylétheramine de formule (I) et/ou alkylétherdiamine de formule (II)
**R¹-(O-A)-NH₂** **(I)**
**R²-(O-A)-NH-R³-NH₂** (II)
R¹ étant un groupe hydrocarbyle comportant 6 à 24 atomes de carbone,
R² étant un groupe hydrocarbyle comportant 6 à 24 atomes de carbone,
R³ étant un groupe hydrocarbyle aliphatique comportant 2 à 4 atomes de carbone,
A étant un groupe alkylène comportant 2 à 6 atomes de carbone,
**caractérisé en ce que** le procédé comprend l'ajout à la composition de collecteur d'au moins un alcool polyhydrique miscible à l'eau ayant deux ou trois groupes hydroxyle,
l'alcool polyhydrique miscible à l'eau (composant B) ayant deux ou trois groupes hydroxyle étant choisi dans le groupe constitué par l'éthylène glycol, le propylèneglycol, le butylèneglycol, le pentanediol, le néopentylglycol, l'hexanediol, le glycérol, le diéthylèneglycol et le triéthylèneglycol,
les termes « améliorer la performance de collecteur » signifiant
(i) une augmentation du taux de récupération de minerai de fer lorsque l'alcool polyhydrique miscible à l'eau ayant deux ou trois groupes hydroxyle est présent, par comparaison avec le cas où ledit alcool est absent ;
(ii) une sélectivité plus élevée dans l'élimination de silicate, ce qui signifie que la composition de collecteur comprenant l'alcool polyhydrique miscible à l'eau permet à une proportion plus élevée du fer d'être retenue et une proportion plus élevée du silicate d'être éliminée, par comparaison avec le cas où ledit alcool est absent ;
(iii) que la quantité de fer retenue et la quantité de silicate éliminée dans le procédé de flottation selon le deuxième aspect en la présence de l'alcool polyhydrique miscible à l'eau reste essentiellement inchangée lorsque la température à laquelle ledit procédé est exécuté chute jusqu'à des températures inférieures à 10 °C, préférablement jusqu'à 5 °C, ou même en dessous de 5 °C, par comparaison avec le cas où ledit alcool est absent auquel cas la quantité de fer retenue et la quantité de silicate éliminée devient plus faible ;
(iv) que l'écume formée par la composition de collecteur comprenant l'alcool polyhydrique miscible à l'eau est moins volumineuse, et après séparation de la cellule de flottation, elle se désintègre plus vite, par comparaison avec le cas où ledit alcool est absent, et
une amélioration de performance de collecteur et une amélioration de la performance de collecteur étant supposées avoir lieu si l'une ou plusieurs des conditions (i) à (iv) sont satisfaites.

24. Procédé selon la revendication 23, le composant A et le composant B étant ajoutés à la pâte en une quantité totale de 1 à 1 000 g/t par rapport à la quantité de minerai de fer présente.

25. Procédé selon l'une ou plusieurs des revendications 23 et/ou 24, le minerai de fer étant choisi dans le groupe constitué par la magnétite, l'hématite et la goethite.

26. Procédé selon l'une ou plusieurs des revendications 23 à 25, un dispersant, un agent d'extension de chaîne, un mousseur, un agent antimousse, un co-collecteur et/ou un dépresseur étant présent dans la pulpe.
